# EUROPEAN PATENT APPLICATION

(11) **EP 1 014 019 A1**
(43) Date of publication of application: **28.06.2000**
(21) Application number: 99204359.6
(22) Date of filing: 16.12.1999
(51) Int. Cl.: F25D 31/00

(54) **Method and device for the batchwise vacuum cooling of products**

(30) Priority: 24.12.1998 NL 1010903
(71) Applicant: York - inham refrigeration b.v., 3300 AJ Dordrecht (NL)
(72) Inventor: Beismann, Richard Alfons Maria, 4817 KZ Breda (NL); Smeets, Ronald Christiaan Anna, 4814 JX Breda (NL)
(74) Representative: Volmer, Johannes Cornelis

(57) **Abstract**

In a method and device for the batchwise vacuum cooling of water-containing products, in particular food products, in a cooling chamber (19) through a substantial temperature range, for example from 95 to 5°C, the water-vapour condenser (18) which is used is cooled using a pumpable secondary cold-transfer medium, which undergoes a phase transition from solid to liquid due to heat which is withdrawn from the condensing water vapour, such as for example a mixture of water and ice. Due to the high energy content of a secondary cold-transfer medium of this nature and its good heat transfer coefficient, cooling through a substantial temperature range of this nature can be carried out quickly.

## Description

The present invention relates to a method for the batchwise vacuum cooling of water-containing products, in particular food products, in a vacuum-cooling device, in which products which are to be cooled are leaded into a cooling chamber, the pressure in the cooling chamber is reduced with the aid of one or more vacuum means, the water vapour which is consequently released from the products is condensed in a water-vapour condenser, and the gases which cannot be condensed are discharged with the aid of the vacuum means.

A method of this nature, and a device for carrying it out, are known from the prior art, for example from Dutch Patent Applications 8100173 and 8501978. Vacuum cooling is used, inter alia, in market halls where water-containing products, such as for example lettuce, purslane and other leafy vegetables have to be cooled rapidly in order to be kept cool and fresh for prolonged periods of time. In vacuum cooling, the products which are to be treated, which are often packaged in boxes, crates or cases, are placed in the cooling chamber, after which the pressure in the cooling chamber is reduced with the aid of one or more vacuum pumps until the saturation pressure at the prevailing temperature (flash point) of the water is reached. Heat is required to vaporize water from the products, and this heat is withdrawn from the products themselves. The water vapour which is released is condensed at the cooled water-vapour condenser, while the gases which cannot be condensed, such as air, are removed with the aid of the vacuum pump. After the desired final temperature of the products has been reached, the vacuum in the cooling chamber is eliminated and the batch of cooled products can be stored or transported and a further batch of products which are to be treated can be introduced into the cooling chamber, after which the cooling cycle is repeated.

A vaporizing coolant such as R22 is used for vacuum cooling according to the prior art described above.

To cool ready-to-eat food products and the like, for example fast-food meals, from, for example 95 to about 4°C, cold air is often used. However, the total cooling period is then lengthy.

If vacuum cooling for cooling products of this nature is carried out using a vaporizing coolant, one of the drawbacks is that at the end of the cooling process, i.e. at low final temperatures, the vaporization temperature falls from -5°C to -20°C if rapid and successful heat transfer is to be achieved. Rapid cooling of products of this nature is important, inter alia, for their quality and shelf life.

A further drawback is that at the start of cooling, i.e. when the temperature difference between condensing water vapour and the coolant is highest, and therefore the heat transfer from condensing water vapour to the coolant and consequently also the mass flow rate of water vapour out of the cooling chamber to the condenser are high, there is a risk that not all the water vapour will condense in the condenser, but rather will be sucked in by the vacuum pump. This entails the risk of condensation from water vapour in the pump oil, thus disturbing the operation of the vacuum pump, with the result that the required final pressure and therefore final temperature of the products in the cooling chamber may not be reached. Consequently, excessively large and therefore expensive vacuum pumps are often used.

The object of the present invention is to eliminate these drawbacks and, in general terms, to improve the known method and device for vacuum cooling of water-containing products, particularly when the difference between the starting temperature of the products to be cooled and the final temperature is relatively high.

According to the invention, this object is achieved by the fact that, in a method of the type described above, the water-vapour condenser is cooled using a pumpable secondary cold-transfer medium, which undergoes a phase transition from solid to liquid due to heat which is withdrawn from the condensing water vapour.

In this description, coolant is understood to mean an agent which actively participates in the cooling process by changing phase and/or pressure. Examples of such agents are CFCs, HFCs, HCFCs and the like. By contrast, a cold-transfer medium merely transports or stores heat. This may involve phase changes, but no significant changes in pressure, as may occur in coolants.

In the method for the vacuum cooling of water-containing products according to the invention, a secondary cold-transfer medium is used which comprises a mixture of solid and liquid matter, in which the solid matter is partially converted into the liquid. A cold-transfer medium of this nature, also referred to below as solid-liquid mixture, contains both sensible energy (the low temperature of the medium) and latent energy (required for the transition from the solid phase to the liquid phase). The temperature of a solid-liquid mixture of this nature, in which, during cooling, the solid constituent passes into liquid form as a result of absorption of heat which is withdrawn from the condensing water vapour, is virtually constant throughout the entire cooling period, even in the event of substantial cooling ranges, in contrast to a conventional cooling system, in which the vaporization temperature falls at the end of the process, owing to the deterioration in the heat transfer. Furthermore the heat transfer coefficient of a solid-liquid mixture as used in the method according to the invention is better than that of the vaporizing coolants which are currently used, with the result that a smaller heat-exchanging area is required. The high energy density (kJ/m³) of the solid-liquid mixture allows good buffering of the cold-transfer medium, with the result that it is possible to reduce the installed refrigerating output considerably.

The high heat transfer coefficient of the solid-liquid mixture ensures that even at the end of a cooling range, where the temperature difference between the condensing water vapour and the solid-liquid mixture is lowest, sufficient heat is still withdrawn from the water vapour in a short time, with the result that the products are cooled successfully and the desired final temperature is reached quickly.

The secondary cold-transfer medium which is used in the method according to the invention is itself preferably cooled with the aid of a primary coolant, for example CFC, HCFC, HFC or natural coolant, such as ammonia or propane. According to a preferred embodiment of the method according to the invention, a (scraped) heat exchanger is used for this cooling. Other examples of the generation of a solid-liquid mixture as a secondary cold-transfer medium comprise an ejector, a (thermo)compressor or a sublimation device. Since each of these techniques are used in their own particular fields, the selection of a particular technique is also determined by the refrigeration output required.

The secondary cold-transfer medium used is preferably a mixture of water and ice, the freezing point of which is adjusted, if desired, with the aid of an agent for freezing point depression. The secondary cold-transfer medium advantageously comprises water containing ice crystals which have been made from an aqueous solution. As is known to the person skilled in the art, the type of agent for freezing point depression and its concentration determine the freezing point of the mixture. Examples of agents for freezing point depression are generally known in the art and may be selected from alcohols, salts and sugars and the like, such as ethanol, sodium chloride and the like. The aqueous solution may, if desired, contain one of the corrosion-inhibiting agents which are in general use and are commercially available. The temperature of a solid-liquid mixture which is composed in this way may vary from -2 to -40°C, depending on the type and concentration of the agent for freezing point depression.

The invention also relates to a vacuum-cooling device for the batchwise vacuum cooling of water-containing products, in particular food products, which device comprises a cooling chamber, which is connected to vacuum means for reducing the pressure in the cooling chamber, and a water-vapour condenser, which is in communication with the cooling chamber and the vacuum means and has a condensation side for condensing water vapour and a cold-transfer-medium side for cooling using a cold-transfer medium, which vacuum-cooling device is characterized in that a system of pipes for circulating the secondary cold-transfer medium is connected to the water-vapour condenser and a device for cooling the secondary cold-transfer medium, the secondary cold-transfer medium being a cold-transfer medium which undergoes a phase transition from solid to liquid due to heat which is withdrawn from the condensing water vapour.

Preferred embodiments of the device according to the invention are defined in the dependent device claims.

The system of pipes for circulating the secondary cold-transfer medium is advantageously divided into a first pipe loop, which comprises the water-vapour condenser and a storage tank for the secondary cold-transfer medium, and a second pipe loop, which connects the storage tank to the device for cooling the secondary cold-transfer medium, i.e. preferably a (scraped) heat exchanger in which the secondary cold-transfer medium is cooled with the aid of a primary coolant. As has already been discussed above, the solid-liquid mixture can be readily buffered, with the result that cold can be stored in the storage tank when the vacuum-cooling device itself is not in use, for example while the cooling chamber is being loaded or emptied.

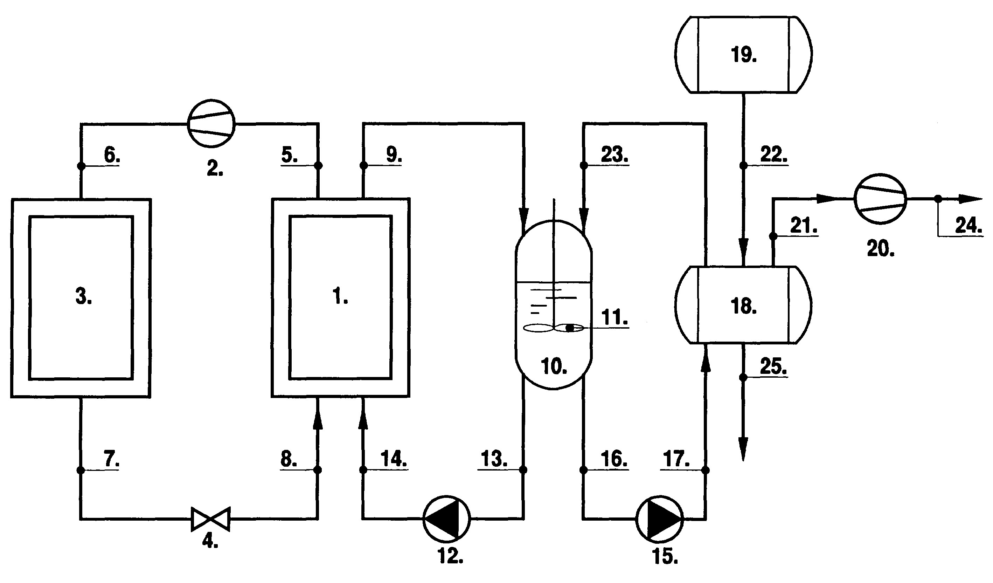

The method and device according to the invention will be explained below with reference to the drawing, in which the only figure is a diagrammatic depiction of a preferred embodiment of the invention.

The process according to the invention, as illustrated in the figure, can be roughly divided into four parts. The cold-generation side of this process, in which a solid-liquid mixture is generated as a secondary cold-transfer medium, for example an aqueous solution of ethanol having pure ice crystals, comprises an ice generator 1, a compressor 2, a condenser 3 and an expansion unit 4. The ice generator 1 is, for example, a scraped heat exchanger, in which a primary coolant, for example CFC, HCFC, HFC or natural coolant, is allowed to vaporize and thus cools the cold-transfer medium in the heat exchanger to such an extent that ice is formed at the other (cold-transfer medium) side in the heat exchanger. The layer of ice which is formed is continuously removed from the wall by a number of scrapers, which, in the case of a shell-and-tube heat exchanger, for example, press in a rotating fashion against the inside of the tube wall. The primary coolant which has vaporized in the ice generator 1 passes via the dry suction line 5 to the compressor 2 and then, via compression line 6, to the condenser 3. The coolant which is condensed therein flows back to ice generator 1 via liquid line 7, expansion unit 4 and liquid/vapour line 8.

The solid-liquid mixture which is formed in the ice generator 1 flows via line 9 to storage tank 10, which is provided with an agitator 11 in order to maintain homogeneity of the solid-liquid mixture. Since the vacuum-cooling process is a batchwise process, cold can be stored in the storage tank 10. With the aid of pump 12, the solid-liquid mixture is pumped back to the ice generator 1 via suction line 13 and compression line 14, in order to be cooled again (or further).

From the storage tank 10, the cold solid-liquid mixture is pumped to the water-vapour condenser 18 with the aid of pump 15, via suction line 16 and compression line 17, which water-vapour condenser 18 is a heat exchanger with an internal liquid separator, for example of the shell-and-tube type, if desired containing baffle plates, and the ice in the solid-liquid mixture is melted in the tubes of this exchanger by the water vapour which condenses on its shell side. During the cooling period, the water vapour is withdrawn from the products which are present in the cooling chamber 19. With the aid of vacuum pump 20, the pressure in cooling chamber 19 is reduced via suction line 21 and vacuum hose 22. Via line 23, the melted solid-liquid mixture is returned to the storage tank 10. The gases which do not condense are discharged via discharge line 24, while the condensate (or frost) is discharged via condensate line 25 after the cooling process has been stopped.

In an example of the method according to the invention, the products which are to be treated and have been loaded into the cooling chamber 19 are cooled from more than 95°C (corresponding to 846 mbara water vapour saturation pressure) to ± 5°C (which temperature corresponds to 8.72 mbara water vapour saturation pressure). Cooling of the products in the cooling chamber 19 only takes place after the pressure in the water-vapour condenser 18 and the cooling chamber 19 has been reduced, with the aid of the vacuum pump 20, to the water vapour saturation pressure of 846 mbara at 95°C. When this pressure is reached, the water begins to vaporize out of the products, the energy required being withdrawn from the products themselves, with the result that they are cooled. The vacuum pump 20 itself does not make any direct contribution to cooling. After the desired final temperature has been reached, the vacuum in the cooling chamber 19 is eliminated and the water-vapour condenser 18 is brought to pressure.

The person skilled in the art will understand that the storage tank 10 used in this preferred embodiment is not in itself necesssary for the vacuum-cooling device to operate correctly. The solid-liquid mixture which is generated in the ice generator 1 can be pumped directly to the water-vapour condenser 18. However, the storage tank 10 is useful for reducing the installed refrigeration output of the compressor 2 on the cold-generation side of the device, since cold can be buffered in the storage tank 10 during periods in which no products are being cooled in the cooling chamber 19. In that case, pump 15 is not operating and pump 12 is.

The solid-liquid mixture which is used in the method and device according to the invention is a mixture of a liquid (optionally with the addition of an agent for freezing point depression) and ice crystals. The presence of these ice crystals in the liquid provides a high energy density. The solid-liquid mixture has a high heat transfer coefficient, due to the presence of the melting ice crystals, and this has a beneficial effect on the total heat transfer.

For a 10% aqueous solution of ethanol as liquid starting material, the following table shows the percentage by weight of ethanol in the solution, the freezing point and the percentage by weight of ice crystals.

| % WT ETHANOL | FREEZING POINT (°C) | % WT ICE CRYSTALS |
|---|---|---|
| 10.00 | - 4.46 (-4.5) | 0 |
| 11.03 | - 5.0 | 9.34 |
| 11.95 | - 5.5 | 16.32 |
| 12.84 | - 6.0 | 22.12 |
| 13.71 | - 6.5 | 27.06 |
| 14.55 | - 7.0 | 31.27 |

As can be seen from the table, the starting solution contains 10% by weight of ethanol and therefore has a freezing point of approximately -4.5°C. When pure ice crystals are formed as a result of this starting solution being cooled in the ice generator, the concentration of ethanol in the solution increases, and therefore the freezing point becomes lower.

In an example of the method according to the invention, the refrigeration output required was 50 kW in the water-vapour condenser. For this example, the abovementioned 10% solution of ethanol in water was used at a constant flow rate of 1.90 m³/h and at an inlet temperature of -6.5°C, corresponding to 27.06% by weight of ice crystals in the solution. At the start of the process, the outlet temperature of the solution was -4.46°C, meaning that all the ice crystals were melted. At the end of the process, the temperature was -5.5°C, corresponding to 16.32% of ice crystals in the solution.

The agent for freezing point depression also has the function of allowing fine and soft ice crystals to form in the ice generator, thus reducing the risk of the scrapers becoming jammed owing to large, hard ice crystals.

## Claims

1. Method for the batchwise vacuum cooling of water-containing products, in particular food products, in a vacuum-cooling device, in which products which are to be cooled are loaded into a cooling chamber (19), the pressure in the cooling chamber (19) is reduced with the aid of one or more vacuum means (20), the water vapour which is consequently released from the products is condensed in a water-vapour condenser (18), and the gases which cannot be condensed are discharged with the aid of the vacuum means (20), characterized in that the water-vapour condenser (18) is cooled using a pumpable secondary cold-transfer medium, which undergoes a phase transition from solid to liquid due to heat which is withdrawn from the condensing water vapour.

2. Method according to claim 1, characterized in that the secondary cold-transfer medium is a mixture of water and ice.

3. Method according to claim 2, characterized in that the mixture of water and ice also contains an agent for freezing point depression.

4. Method according to one of the preceding clams, characterized in that the agent for freezing point depression is selected from alcohols, salts and sugars.

5. Vacuum-cooling device for the batchwise vacuum cooling of water-containing products, in particular food products, which device comprises a cooling chamber (19), which is connected to vacuum means (20) for reducing the pressure in the cooling chamber (19), and a water-vapour condenser (18), which is in communication with the cooling chamber (19) and the vacuum means (20) and has a condensation side for condensing water vapour and a cold-transfer-medium side for cooling using a cold-transfer medium, characterized in that a system of pipes for circulating a secondary cold-transfer medium is connected to the water-vapour condenser (18) and a device for cooling the secondary cold-transfer medium, the secondary cold-transfer medium being a cold-transfer medium which undergoes a phase transition from solid to liquid due to heat which is withdrawn from the condensing water vapour.

6. Device according to claim 5, characterized in that the device for cooling the secondary cold-transfer medium is a heat exchanger (1) for cooling the secondary cold-transfer medium with the aid of a primary coolant.

7. Device according to claim 5 or 6, characterized in that the secondary cold-transfer medium is a mixture of water and ice.

8. Device according to claim 7, characterized in that the mixture of water and ice also contains an agent for freezing point depression.

9. Device according to one of the preceding claims 5-8, characterized in that the agent for freezing point depression is selected from alcohols, salts and sugars.

10. Device according to one of the preceding claims 5-9, characterized in that the system of pipes for circulating the secondary cold-transfer medium comprises a first pipe loop which comprises the water-vapour condenser (18) and a storage tank (10) for the secondary cold-transfer medium, and a second pipe loop which connects the storage tank (10) to the device for cooling the secondary cold-transfer medium.
